# EUROPEAN PATENT SPECIFICATION

(11) **EP 1 704 349 B1**
(45) Date of publication and mention of the grant of the patent: **06.06.2012**
(21) Application number: 04804641.1
(22) Date of filing: 01.12.2004
(51) Int. Cl.: F16H 55/34

(54) **CLUTCH WHEEL**
KUPPLUNGSRAD
ROUE D'EMBRAYAGE

(30) Priority: 02.12.2003 IT TO20030963
(43) Date of publication of application: 27.09.2006
(73) Proprietor: DAYCO EUROPE S.r.l., Chieti (IT)
(72) Inventor: MONTANI, Andrea, I-66100 CHieti (IT); DEL VECCHIO, Pietro, I-71016 San Severo (IT)
(74) Representative: Jorio, Paolo
(86) International application number: PCT/EP2004/053214
(87) International publication number: WO 2005/054716

(56) References cited:
- WO-A-2004/079229
- DE-A- 3 934 884
- DE-C- 837 946

## Description

### TECHNICAL FIELD

The present invention relates to an improved clutch wheel in particular designed to co-operate with the drive belt of the internal-combustion engine of a motor vehicle.

### BACKGROUND ART

A traditional drive, for example for driving accessories, comprises a drive pulley driven by the engine shaft, and a series of driven pulleys, which drive respective auxiliary members, for example an alternator and a compressor for the air-conditioning system, and are connected to one another via a belt, for example of the poly-V type.

There is known the use of a clutch wheel for controlling other auxiliary members, for example a water pump, situated in a lateral position with respect to the drive pulley. The clutch wheel co-operates by friction with the back of the belt and is thus drawn along by the drive pulley for actuating the water pump, for example by means of a second clutch, wheel permanently connected to the latter.

The known clutch wheels used for this purpose present the drawback of not ensuring a coefficient of friction adequate for transmission of the torque required in each operating condition. In particular, in the case of rain, there may occur phenomena of "aquaplaning" between the clutch wheel and the back of the belt, with consequent slipping and jamming, or malfunctioning of the water pump.

DE 837 946 C discloses a clutch wheel for bicycle propulsion, having the features of the preamble of claim 1.

WO 2004/079229 A, which is part of the state of the art pursuant to Art. 54(3) and (4) EPC 1973, discloses a clutch wheel designed to cooperate with the back of a belt and having a circumferential clutch surface provided with circumferential draining grooves.

### DISCLOSURE OF INVENTION

The purpose of the present invention is to provide a clutch wheel free from the drawback described above. This purpose is achieved by a clutch wheel as defined in Claim 1.

### BRIEF DESCRIPTION OF THE DRAWINGS

For a better understanding of the present invention, there is now described a preferred embodiment, purely by way of non-limiting example and with reference to the attached plate of drawings, in which:
- Figure 1 shows a drive for accessories comprising a clutch wheel according to the present invention;
- Figure 2 shows the development of a circular clutch surface of the clutch wheel of Figure 1;
- Figure 3 is a partial radial cross-sectional view according to the line III-III of Figure 2 of the clutch wheel of Figure 1; and
- Figure 4 shows an alternative embodiment of the development of the clutch surface of a clutch wheel according to the present invention.

### BEST MODE FOR CARRYING OUT THE INVENTION

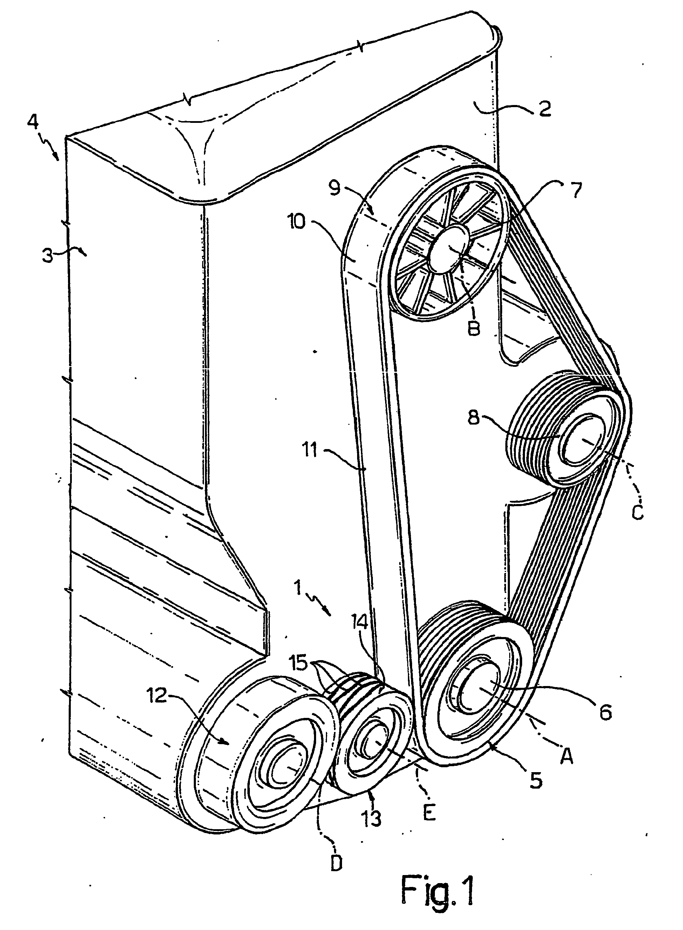

In Figure 1, designated as a whole by 1 is a drive for accessories set on a wall 2 of a casing 3 of an internal-combustion engine 4.

The drive 1 comprises: a drive pulley 5 driven by an engine shaft 6 with axis A coming out from the wall 2; a first driven pulley 7 of an alternator (not illustrated), which can turn about a second axis B parallel to the axis A; and a tensioning pulley 8, which can turn about a third axis C parallel to the axis A.

The pulleys 5 and 7 and the tensioning pulley 8 are connected to one another by a belt 9 having a back 10 and are arranged at the vertices of a triangular path, in which the side that joins the axes A and B identifies a branch 11 of the drive 1.

The drive 1 moreover comprises a clutch wheel 12 for driving a water pump (not illustrated), which can turn about a fourth axis D parallel to the axis A and set on the opposite side of the tensioning pulley 8 with respect to the vertical branch 11 substantially in a position corresponding to the drive pulley 5.

Set between the clutch wheel 12 and the pulley 5, co-operates with both the clutch wheel 12 and the pulley 5, an intermediate clutch wheel 13 that turns about a fifth axis E and transfers the torque from the engine shaft 6 to the water pump.

In particular, the clutch wheel 13 co-operates permanently with the back 10 of the belt 9 in a position corresponding to the arc thereof that runs over the drive pulley 5. The axis E of the clutch wheel 13 is preferably mobile under the action of a driving device that is known and not illustrated, by means of which the clutch wheel 13 can be brought up to, and moved away from, the clutch wheel 12 for activating and deactivating the water pump.

The clutch wheel 13 has a circumferential clutch surface 14, which preferably has a circumferential development that is not a submultiple of the length of the back 10, presents a multiplicity of substantially circumferential grooves 15, which have a cross section 16 such as to enable draining of any humidity or water that may be present on the back 10 of the belt 9 in an area corresponding to the clutch wheel 13.

The grooves 15 of the clutch wheel 13 follow a substantially undulated and periodic circumferential path having the same period along the clutch surface 14.

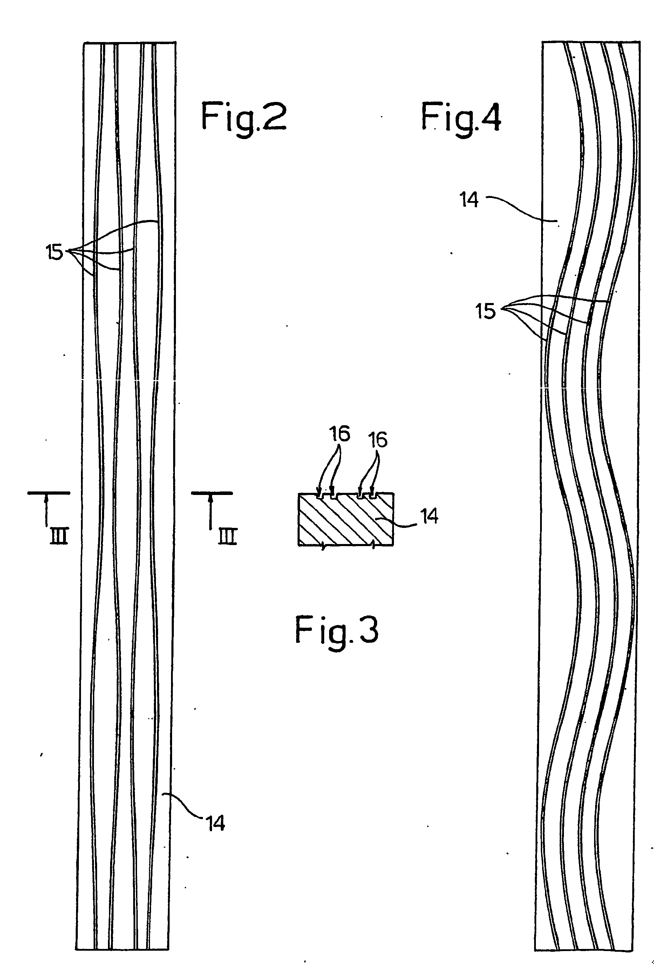

In particular (Figure 2), the grooves 15 are in equal number, and two adjacent grooves are arranged specularly to one another so as to be out of phase by one half-period.

According to another embodiment (Figure 4), the grooves are set alongside one another and spaced at a constant distance apart point by point so as to be out of phase.

Operation of the clutch wheel is described in what follows.

The clutch wheel 13 transfers the torque from the engine shaft 6 to the clutch wheel 12 by friction.

When the drive 1 is in motion, the grooves 15 enable draining of any water that may be present between the surfaces in contact, so favouring adherence.

Furthermore, since the grooves 15 are not circular, their trace on the plane of contact between the clutch wheel 13 and the belt 9 is displaced in a direction parallel to the axis E, instant by instant, so preventing localized wear.

From an examination of the characteristics of the clutch wheel 13 made according to the present invention, the advantages that it enables emerge clearly.

The grooves 15 enable draining of any water that may be present between the surfaces in contact and consequently prevent phenomena of "aquaplaning" that can jeopardize correct driving of the auxiliary member, in particular the water pump.

According to the preferred embodiments described, grooves having a non-circular path enable localized wear of the back of the belt to be prevented.

Finally, it is clear that modifications and variations may be made to the clutch wheel described and illustrated herein, without thereby departing from the sphere of protection of the present invention, as defined in the annexed claims.

In particular, the present invention can be adapted to any type of belt drive, for example the one for the distribution system.

The axis E of the clutch wheel 13 can be either fixed or mobile, causing, in the first case, a continuous driving of the accessory driven by the clutch wheel 12, and in the second case, a selective actuation governed by a remote control.

Alternatively, the clutch wheel 13 can be carried by the shaft of the water pump, and the drive for accessories can comprise a coupling set between the shaft of the pump and the clutch wheel to enable selective driving of the pump itself.

The grooves 15 can be the same as one another or different from one another.

Furthermore, two grooves set alongside one another can be brought closer together and be substantially tangential to a circumference belonging to the clutch surface 14.

## Claims

1. A wheel (13) for driving a driven member, having a circumferential clutch surface (14) with an axis (E) and a plurality of draining grooves (15), **characterized by** being a clutch wheel (1-3) designed to co-operate with the back (10) of a belt (9) of an accessory drive of a combustion engine (4) for a motor vehicle, said grooves (15) extending circumferentially along a substantially undulated path and being separate from one another, and said path is a closed path.

2. The clutch wheel according to Claim 1, **characterized in that** said path is periodic along the circumferential development of said clutch surface (14).

3. The clutch wheel according to any of the preceding claims, **characterized in that** said grooves (15) are symmetrical with respect to a plane perpendicular to said axis (E).

4. The clutch wheel according to any of the preceding claims, **characterized in that** two adjacent grooves are substantially tangential to one and the same circumference belonging to the clutch surface (14).

5. A drive (1) for an internal-combustion engine (4) of a motor vehicle, comprising: a first pulley (5) connected to an engine shaft (6) of said engine (4); at least one second pulley (7) connected to a driven member of said engine; a belt (9) run over said first and second pulley (5, 7) and provided with a back (10); and a first clutch wheel (13) according to any one of the preceding claims, which co-operates with said back (10) of said belt (9) and can be selectively connected to an auxiliary member of said engine (4).

6. The drive according to Claim 5, **characterized in that** it comprises a second clutch wheel (12) connected to said driven member, said first clutch wheel (13) being mobile for co-operating selectively with said second clutch wheel (12).

## Patentansprüche

1. Rad (13) zum Antreiben eines Antriebsteils, das eine Kupplungsumfangsfläche (14) mit einer Achse (E) und eine Vielzahl von Ablaufrillen (15) aufweiset, **dadurch gekennzeichnet, dass** dieses ein Kupplungsrad (13) zum Zusammenwirken mit der Rückseite (10) eines Riemens (9) eines Aggregatantriebs eines Verbrennungsmotors (4) für ein Kraftfahrzeug ist, wobei sich die Rillen (15) in Umtangsrichtung entlang eines im Wesentlichen wellenförmiges Pfads erstrecken und von einander getrennt sind und wobei der Pfad ein geschlossener Pfad ist.

2. Kupplungsrad gemäß Anspruch 1, **dadurch gekennzeichnet, dass** der Pfad entlang der Umfangserstreckung der Kupplungsoberfläche (14) periodisch verläuft.

3. Kupplungsrad gemäß einem der vorhergehenden Anspruche, dadurch gekenntzeichnet, dass die Rillen (15) symmetrisch bezüglich einer zur Achse (E) senkrechten Ebene sind.

4. Kupplungsrad gemäß einem der vorhergehenden Ansprüche, **dadurch gekennzeichnet, dass** zwei benachbarte Rillen im Wesentlichen tangential zu ein und demselben Umfang der Kupplungsoberfläche (14) sind.

5. Antrieb (1) für eine Brennkraftmaschine (4) eines Kraftfahrzeugs, welcher aufweist: eine erste Riemenscheibe (5), die mit einer Motorwelle (6) des Motors (4) verbunden ist; zumindest eine zweite Riemenscheibe (7), die mit einem Antriebsteil des Motors verbunden ist; ein Riemen (9), der über die erste und zweite Riemenscheibe (5, 7) läuft und mit einer Rückseite (10) versehen ist; und ein erstes Kupplungsrad (13) gemäß einem der vorhergehenden Ansprüche, welches mit der Rückseite (10) des Riemens (9) zusammenwirkt und wahlweise mit einem Aggregat des Motors (4) verbunden werden kann.

6. Antrieb gemäß Anspruch 5, ferner **gekennzeichnet durch** ein zweites Kupplungsrad (12), das mit dem Antriebsteil verbunden ist, wobei das erste Kupplungsrad (13) beweglich ist, um wahlweise mit dem zweiten Kupplungsrad (12) zusammenzuwirken.

## Revendications

1. Roue (13) destinée à entraîner un élément entraîné, présentant une surface d'embrayage circonférentielle (14) dotée d'un axe (E) et d'une pluralité de rainures de drainage (15), **caractérisée par** le fait d'être une roue d'embrayage (13) conçue pour coopérer avec la partie arrière (10) d'une courroie (9) d'un entraînement d'accessoire d'un moteur à combustion (4) destiné un véhicule à moteur, lesdites rainures (15) s'étendant suivant la circonférence le long d'un trajet globalement ondulé et étant séparées les unes des autres, et ledit trajet est un trajet clos.

2. Roue d'embrayage selon la revendication 1, **caractérisée en ce que** ledit trajet est périodique le long de la course circonférentielle de ladite surface d'embrayage (14).

3. Roue d'embrayage selon l'une quelconque des revendications précédentes, **caractérisée en ce que** lesdites rainures (15) sont symétriques par rapport à un plan perpendiculaire audit axe (E).

4. Roue d'embrayage selon l'une quelconque des revendications précédentes, **caractérisée en ce que** deux rainures adjacentes sont globalement tangentielles à une et même circonférence appartenant à la surface d'embrayage (14).

5. Entraînement (1) destiné à un moteur à combustion interne (4) d'un véhicule à moteur, comprenant : une première poulie (5) reliée un arbre de moteur (6) dudit moteur (4) ; au moins une deuxième poulie (7) reliée un élément entraîné dudit moteur ; une courroie (9) s'étendant sur lesdites première et deuxième poulies (5, 7) et dotée d'une partie arrière (10) ; et une première roue d'embrayage (13) selon l'une quelconque des revendications précédentes, qui coopère avec ladite partie arrière (10) de ladite courroie (9) et qui peut être sélectivement reliée à un élément auxiliaire dudit moteur (4).

6. Entraînement selon la revendication 5, **caractérisé en ce qu'**il comprend une deuxième roue d'embrayage (12) reliée audit élément entraîné, ladite première roue d'embrayage (13) étant mobile afin de coopérer sélectivement avec ladite deuxième roue d'embrayage (12).
